# EUROPÄISCHE PATENTSCHRIFT

(11) **EP 3 593 036 B1**
(45) Veröffentlichungstag und Bekanntmachung des Hinweises auf die Patenterteilung: **07.06.2023**
(21) Anmeldenummer: 18708073.4
(22) Anmeldetag: 20.02.2018
(51) Int. Cl.: F21S 43/13, F21S 43/20, F21S 43/31

(54) **BELEUCHTUNGSVORRICHTUNG FÜR EIN KRAFTFAHRZEUG**
LIGHTING DEVICE FOR A MOTOR VEHICLE
DISPOSITIF D'ÉCLAIRAGE POUR UN VÉHICULE AUTOMOBILE

(30) Priorität: 09.03.2017 DE 102017203889
(43) Veröffentlichungstag der Anmeldung: 15.01.2020
(73) Patentinhaber: Bayerische Motoren Werke Aktiengesellschaft, 80809 München (DE)
(72) Erfinder: ERDL, Helmut, 83126 Flintsbach (DE); HANAFI, Abdelmalek, 80686 München (DE); SOROKIN, Lenja, 80805 München (DE)
(86) Internationale Anmeldenummer: PCT/EP2018/054132
(87) Internationale Veröffentlichungsnummer: WO 2018/162224

(56) Entgegenhaltungen:
- WO-A1-2015/199307
- WO-A1-2016/047686
- WO-A1-2016/072484
- WO-A1-2016/072505
- WO-A1-2016/087642
- WO-A1-2016/091795
- DE-A1-102015 103 179
- KR-A- 20150 134 979

## Beschreibung

Die Erfindung betrifft eine Beleuchtungsvorrichtung für ein Kraftfahrzeug sowie ein entsprechendes Kraftfahrzeug.

Aus dem Stand der Technik sind Ansätze bekannt, wonach Symbole mittels eines Lichtmoduls auf den Boden in der Umgebung eines Kraftfahrzeugs projiziert werden. Dabei besteht das Problem, dass die Reichweite solcher Lichtmodule begrenzt ist und deshalb die damit generierten Symbole nur eingeschränkt zur Fahrerassistenz bzw. zur Kommunikation mit anderen Verkehrsteilnehmern (z.B. als Warnsignale) genutzt werden können.

Die Druckschriften WO 2016/072484 A1 und WO 2016/072505 A1 zeigen jeweils eine Beleuchtungsvorrichtung gemäß dem Oberbegriff des Anspruch 1,

Die Druckschrift KR 2015 0134979 A offenbart eine Beleuchtungsvorrichtung für ein Kraftfahrzeug, in der ein Hologrammspeichermedium mittels einer Lichtquelle beleuchtet wird und hierdurch für einen Betrachter ein Hologramm sichtbar wird.

Das Dokument WO 2015/199307 A1 offenbart eine Beleuchtungsvorrichtung, welche mittels eines diffraktiven optischen Elements, auf welches das Licht einer Laserdiode fällt, eine Symbolik im Umfeld des Kraftfahrzeugs generiert.

Aufgabe der Erfindung ist es, eine Beleuchtungsvorrichtung für ein Kraftfahrzeug mit einem Lichtmodul zu schaffen, mit dem eine gut wahrnehmbare Symbolik mit größerem Abstand vom Kraftfahrzeug generiert werden kann.

Diese Aufgabe wird durch die Beleuchtungsvorrichtung gemäß Patentanspruch 1 gelöst. Weiterbildungen der Erfindung sind in den abhängigen Ansprüchen definiert.

Die erfindungsgemäße Beleuchtungsvorrichtung ist für ein Kraftfahrzeug, insbesondere einen PKW und ggf. auch einen LKW, vorgesehen. Die Beleuchtungsvorrichtung umfasst ein Lichtmodul, welches im Folgenden näher beschrieben wird. Gegebenenfalls kann die Beleuchtungsvorrichtung auch mehrere solcher Lichtmodule aufweisen. Das Lichtmodul beinhaltet eine Laserlichtquelle zur Generierung von Laserlicht, wobei die Laserlichtquelle eine oder mehrere Laserdioden umfasst. Die Leistung der jeweiligen Laserdioden liegt dabei vorzugsweise zwischen 200 mW und 300 mW, kann jedoch ggf. auch höher sein und bei bis zu 3 bis 4 Watt liegen. Vorzugsweise erzeugt die Laserlichtquelle ein oder mehrere kollimierte Strahlbündel aus Laserlicht.

Sofern im Folgenden und insbesondere in den Patentansprüchen Wechselwirkungen zwischen der Beleuchtungsvorrichtung und dem Kraftfahrzeug beschrieben werden, so ist dies immer dahingehend zu verstehen, dass die Wechselwirkung bei Anordnung bzw. Einbau der Beleuchtungsvorrichtung im Kraftfahrzeug auftritt. Die Komponenten der Beleuchtungsvorrichtung, die eine entsprechende Wechselwirkung mit dem Kraftfahrzeug bzw. Bauteilen des Kraftfahrzeugs haben, sind somit derart ausgestaltet, dass die Wechselwirkung bei Anordnung bzw. Einbau der Beleuchtungsvorrichtung im Kraftfahrzeug hervorgerufen wird.

Das Lichtmodul der erfindungsgemäßen Beleuchtungsvorrichtung beinhaltet eine optische Einrichtung, auf welche das mit der Laserlichtquelle generierte Laserlicht fällt und welche derart ausgestaltet ist, dass sie bei Betrieb der Beleuchtungsvorrichtung im Kraftfahrzeug eine vorgegebene Symbolik im Umfeld des Kraftfahrzeugs, vorzugsweise am Boden, generiert. Die optische Einrichtung umfasst ein oder mehrere holographisch-optische Elemente, welche für das Laserlicht im Wesentlichen nicht-absorbierend sind und welche dazu eingerichtet sind, zur Generierung der vorgegebenen Symbolik eine Interferenz des Laserlichts durch dessen Phasenmodulation zu bewirken. Der Begriff "nicht-absorbierend" ist dabei derart zu verstehen, dass das Laserlicht nach Passieren des oder der holographisch-optischen Elemente eine Intensität von 95% oder mehr und insbesondere von 99% oder mehr und besonders bevorzugt von 100% im Vergleich zur Intensität vor dem Passieren des oder der holographisch-optischen Elemente aufweist. Je nach Ausführungsform können die holographisch-optischen Elemente jeweils reflektierende oder transmissive Elemente sein.

In der erfindungsgemäßen Beleuchtungsvorrichtung, welche insbesondere einen Scheinwerfer darstellt, ist die Laserlichtquelle eine RGB-Laserlichtquelle, welche als Laserdioden eine Anzahl (d.h. eine oder mehrere) von roten Laserdioden, eine Anzahl (d.h. eine oder mehrere) von grünen Laserdioden und eine Anzahl (d.h. eine oder mehrere) von blauen Laserdioden umfasst. Als Wellenlänge für das Licht der einzelnen Laserdioden werden die üblicherweise in RGB-Lichtsystemen verwendeten Wellenlängen eingesetzt. Vorzugsweise hat das rote Laserlicht eine Wellenlänge zwischen 610 nm und 760 nm, das grüne Laserlicht eine Wellenlänge zwischen 500 nm und 750 nm und das blaue Laserlicht eine Wellenlänge zwischen 450 nm und 500 nm.

In der erfindungsgemäßen Beleuchtungsvorrichtung ist der Anzahl von roten Laserdioden eine erste holographisch-optische Struktur zugeordnet, auf welche (vorzugsweise ausschließlich) das rote Laserlicht der Anzahl von roten Laserdioden fällt, wohingegen der Anzahl von grünen Laserdioden eine zweite holographisch-optische Struktur zugeordnet ist, auf welche (vorzugsweise ausschließlich) das grüne Laserlicht der Anzahl von grünen Laserdioden fällt. Darüber hinaus ist der Anzahl von blauen Laserdioden eine dritte holographisch-optische Struktur zugeordnet, auf welche (vorzugsweise ausschließlich) das blaue Licht der Anzahl von blauen Laserdioden fällt. Die erste, zweite und dritte holographisch-optische Struktur sind dabei Bestandteil des oder der holographisch-optischen Elemente. Das Lichtmodul ist in dieser Ausführungsform derart ausgestaltet, dass das rote, grüne und blaue Laserlicht nach Passieren der ersten, zweiten und dritten holographisch-optischen Struktur überlagert wird und hierdurch die Symbolik in Weißlicht generiert wird.

Die optische Einrichtung der erfindungsgemäßen Beleuchtungsvorrichtung umfasst neben dem oder den holographisch-optischen Elementen als weitere optische Elemente, die im Strahlengang des Laserlichts auf das oder die holographisch-optischen Elemente folgen, einen ersten, einen zweiten und einen dritten Spiegel. Bei angeschaltetem Lichtmodul fällt auf den ersten Spiegel ausschließlich ein erstes Laserlicht ausgewählt aus dem roten, grünen und blauen Laserlicht, wobei der erste Spiegel das erste Laserlicht reflektiert. Bei angeschaltetem Lichtmodul fallen auf den zweiten Spiegel ausschließlich das am ersten Spiegel reflektierte erste Laserlicht und ein zweites Laserlicht ausgewählt aus dem roten, grünen und blauen Laserlicht, wobei sich das zweite Laserlicht vom ersten Laserlicht unterscheidet (d.h. eine andere Farbe aufweist) und wobei der zweite Spiegel das zweite Laserlicht reflektiert und das erste Laserlicht durchlässt. Bei angeschaltetem Lichtmodul fallen auf den dritten Spiegel ausschließlich das am zweiten Spiegel durchgelassene erste Laserlicht, das am zweiten Spiegel reflektierte zweite Laserlicht und ein drittes Laserlicht ausgewählt aus dem roten, grünen und blauen Laserlicht, wobei sich das dritte Laserlicht vom ersten und zweiten Laserlicht unterscheidet (d.h. eine andere Farbe aufweist) und wobei der dritte Spiegel das dritte Laserlicht reflektiert und das erste und zweite Laserlicht durchlässt, wobei der erste, zweite und dritte Spiegel derart zueinander angeordnet sind, dass das an diesen Spiegeln reflektiere Laserlicht überlagert wird und hierdurch die Symbolik in Weißlicht generiert wird.

Der obige Begriff der Symbolik ist derart zu verstehen, dass es sich hierbei um ein oder mehrere, durch einen Menschen wahrnehmbare Symbole handelt. Insbesondere sind die Symbole durch den Fahrer bzw. einen Insassen des Kraftfahrzeugs oder auch andere Verkehrsteilnehmer im Umfeld des Kraftfahrzeugs wahrnehmbar. In einer bevorzugten Variante umfasst die Symbolik einen oder mehrere Pfeile und/oder eine oder mehrere Linien. Je nach Ausgestaltung kann die Symbolik eine oder mehrere weiße und/oder eine oder mehrere farbige Symbole umfassen.

Der obige Begriff des Umfelds des Kraftfahrzeugs ist weit zu verstehen und kann insbesondere der Reichweite eines Fernlichts bzw. Abblendlichts des Scheinwerfers des Kraftfahrzeugs entsprechen. Wie weiter unten beschrieben, kann das Lichtmodul auch in einem Scheinwerfer des Kraftfahrzeugs verbaut sein. Falls die Symbolik dabei mit dem Scheinwerferlicht des Kraftfahrzeugs überlagert wird, ist sie derart hell, dass sie auch im Scheinwerferlicht noch sichtbar ist.

Die Erfindung zeichnet sich dadurch aus, dass erstmals phasenmodulierende holographisch-optische Elemente in einer Beleuchtungsvorrichtung für ein Kraftfahrzeug verwendet werden. Solche holographisch-optischen Elemente sind an sich bekannt und zeichnen sich dadurch aus, dass die Strukturen zur Ablenkung des Lichts im Bereich von dessen Wellenlänge liegen, so dass Beugungseffekte auftreten. Erfindungsgemäß ist dabei sichergestellt, dass das Laserlicht bei Passieren der holographisch-optischen Elemente kohärent ist, so dass das Licht interferieren kann.

Die erfindungsgemäße Beleuchtungsvorrichtung weist den Vorteil auf, dass durch die Verwendung von phasenmodulierenden holographisch-optischen Elementen auf einfache Weise eine gewünschte Symbolik im Umfeld des Kraftfahrzeugs generiert werden kann. Dabei ist auch eine ausreichende Helligkeit der Symbolik gewährleistet, dass die holographisch-optischen Elemente für das Laserlicht im Wesentlichen nicht-absorbierend sind.

In einer bevorzugten Variante der erfindungsgemäßen Beleuchtungsvorrichtung umfassen das oder die holographisch-optischen Elemente ein oder mehrere an sich bekannte diffraktive optische Elemente.

In einer weiteren Ausgestaltung liegt die Gesamtfläche der holographisch-optischen Elemente in Draufsicht zwischen 25 mm² und 500 mm², insbesondere zwischen 25 mm² und 250 mm². Durch die Verwendung solcher holographisch-optischen Elemente wird erreicht, dass das Laserlicht über einen flächigen Bereich verteilt wird, wodurch eine ausreichende Augensicherheit gewährleistet ist.

In einer weiteren bevorzugten Ausführungsform ist das Lichtmodul derart ausgestaltet, dass das Laserlicht der Laserlichtquelle unter Zwischenschaltung von einer oder mehreren Lichtfasern zu der optischen Einrichtung gelenkt wird, wodurch ein flexibler Einbau des Lichtmoduls in der Beleuchtungsvorrichtung ermöglicht wird. Nichtsdestotrotz ist es auch möglich, dass das Laserlicht ohne Zwischenschaltung solcher Lichtfaser zu der optischen Einrichtung gelenkt wird.

In einer weiteren, besonders bevorzugten Ausführungsform umfasst die Beleuchtungsvorrichtung neben dem Lichtmodul eine Lichteinrichtung, um eine vorgegebene Lichtverteilung zusätzlich zur Symbolik zu generieren. Mit anderen Worten erfolgt die Generierung der Symbolik gleichzeitig mit der Erzeugung der vorgegebenen Lichtverteilung. Die Beleuchtungsvorrichtung ist dabei vorzugsweise ein Scheinwerfer bzw. umfasst einen Scheinwerfer, wobei in diesem Fall die Lichteinrichtung dazu eingerichtet ist, als vorgegebene Lichtverteilung eine Abblendlicht- und/oder Fernlichtverteilung zu generieren. Nichtsdestotrotz ist es auch möglich, dass die Beleuchtungsvorrichtung eine Fahrzeugsignalleuchte, wie z.B. ein Rücklicht und/oder ein Bremslicht, umfasst. In diesem Fall ist die Lichteinrichtung dazu eingerichtet, als vorgegebene Lichtverteilung ein Lichtsignal zu generieren.

In einer bevorzugten Variante der obigen Ausführungsformen, die neben dem Lichtmodul eine Lichteinrichtung umfassen, ist bei angeschalteter Lichteinrichtung und angeschaltetem Lichtmodul die vorgegebene Symbolik mit der vorgegebenen Lichtverteilung überlagert. Die Symbolik ist somit derart ausgestaltet, dass sie trotz der zusätzlichen Lichtverteilung sichtbar wird und sich davon abhebt. Ist die Beleuchtungsvorrichtung ein Scheinwerfer, der weißes Scheinwerferlicht abstrahlt, hat die Symbolik vorzugsweise auch eine weiße Farbe. Strahlt die Beleuchtungsvorrichtung demgegenüber monochromatisches Licht ab, entspricht die Farbe der Symbolik vorzugsweise auch der Farbe dieses Lichts. Hierdurch werden gesetzliche Vorgaben berücksichtigt.

In einer weiteren Variante ist die erfindungsgemäße Beleuchtungsvorrichtung derart ausgestaltet, dass das Lichtmodul ausschließlich bei angeschalteter Lichteinrichtung angeschaltet sein kann, was mit einer geeigneten Steuereinrichtung erreicht werden kann. Auch mit dieser Variante werden entsprechende gesetzliche Vorgaben berücksichtigt.

In einer weiteren Variante der erfindungsgemäßen Beleuchtungsvorrichtung umfasst die optische Einrichtung neben dem oder den holographisch-optischen Elementen eine oder mehrere Linsen, die im Strahlengang des Laserlichts auf das oder die holographisch-optischen Elemente folgen.

In einer weiteren Variante umfasst die erfindungsgemäße Beleuchtungsvorrichtung eine Aktorik, mit der das Lichtmodul relativ zu der restlichen Beleuchtungsvorrichtung bewegbar ist. Auf diese Weise kann eine Bewegung der generierten Symbolik erreicht werden und demzufolge deren Wahrnehmbarkeit verbessert werden.

In einer weiteren bevorzugten Ausführungsform umfasst die erfindungsgemäße Beleuchtungsvorrichtung eine Steuereinrichtung, welche dazu eingerichtet ist, Sensorsignale von einer Umfeldsensorik des Kraftfahrzeugs zu empfangen und in Abhängigkeit von den Sensorsignalen der Umfeldsensorik das An- und Abschalten des Lichtmoduls zu steuern. Bei der Umfeldsensorik kann es sich z.B. um eine kamerabasierte Sensorik oder ggf. auch um eine Radar- und/oder Lidar-Sensorik oder eine Kombination verschiedener Sensoriken handeln.

In einer bevorzugten Variante der soeben beschriebenen Ausführungsform ist die Steuereinrichtung derart ausgestaltet, dass das Lichtmodul angeschaltet wird, wenn ein oder mehrere Objekte, vorzugsweise ein oder mehrere Objekte unter einem Mindestabstand zum Kraftfahrzeug, durch die Umfeldsensorik detektiert werden. Die Beleuchtungsvorrichtung kann insbesondere in Kombination mit einem Fahrerassistenzsystem des Kraftfahrzeugs genutzt werden. Dabei kann die Symbolik z.B. mittels Linien vor dem Kraftfahrzeug die Breite der Fahrbahn anzeigen. Ebenso kann mittels der Symbolik eine Kollisionswarnung angezeigt werden, die bei Unterschreiten eines Abstands zu anderen Verkehrsteilnehmern die Insassen des Kraftfahrzeugs bzw. die anderen Verkehrsteilnehmer warnt.

Neben der oben beschriebenen Beleuchtungsvorrichtung betrifft die Erfindung ein Kraftfahrzeug, welches eine oder mehrere dieser Beleuchtungsvorrichtungen umfasst. Je nach Ausgestaltung kann es sich dabei um ein manuell gesteuertes Kraftfahrzeug, jedoch ggf. auch um ein autonom fahrendes Kraftfahrzeug handeln. Im Falle eines autonom fahrenden Kraftfahrzeugs dient die Symbolik vor allem zur Hinweisgebung bzw. Warnung anderer Verkehrsteilnehmer im Umkreis des autonom fahrenden Kraftfahrzeugs.

Ausführungsbeispiele der Erfindung werden nachfolgend anhand der beigefügten Figuren detailliert beschrieben.

Es zeigen:
- Fig. 1: eine schematische Darstellung, welche eine erste Variante eines Lichtmoduls in einer nicht zur Erfindung gehörigen Beleuchtungsvorrichtung zeigt;
- Fig. 2: eine schematische Darstellung, welche eine zweite Variante eines Lichtmoduls in einer erfindungsgemäßen Beleuchtungsvorrichtung zeigt;
- Fig. 3 und Fig. 4: verschiedene Draufsichten von oben auf Kraftfahrzeuge mit der erfindungsgemäßen Beleuchtungsvorrichtung, wobei die Generierung unterschiedlicher Symboliken veranschaulicht wird.

Nachfolgend wird eine Variante der Erfindung anhand einer Beleuchtungsvorrichtung in der Form eines Frontscheinwerfers eines Kraftfahrzeugs beschrieben. Der Frontscheinwerfer enthält in an sich bekannter Weise eine Lichteinrichtung, mit der das Abblendlicht und das Fernlicht generiert wird, wobei diese Lichteinrichtung in den Figuren nicht gezeigt ist. Zusätzlich zu dieser Lichteinrichtung ist in dem Scheinwerfer ein Lichtmodul verbaut, welches parallel zum Abblendlicht bzw. Fernlicht eine bestimmte Symbolik auf der Straße vor dem Kraftfahrzeug generieren kann.

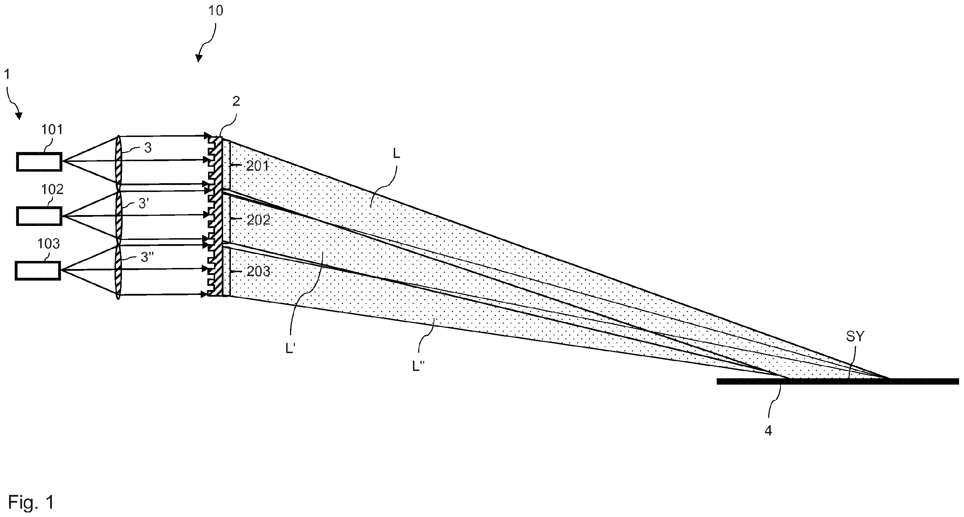

Fig. 1 zeigt eine erste Variante eines nicht zur Erfindung gehörigen Lichtmoduls. Das Lichtmodul ist als Ganzes mit Bezugszeichen 10 bezeichnet und umfasst in der hier beschriebenen Ausführungsform eine Laserlichtquelle 1 mit drei Laserdioden 101, 102 und 103 sowie drei Kollimatorlinsen 3, 3' und 3". Bei der Laserdiode 101 handelt es sich um eine rote Laserdiode, bei der Laserdiode 102 um eine grüne Laserdiode und bei der Laserdiode 103 um eine blaue Laserdiode. Das Licht der jeweiligen Laserdioden ist durch von diesen Dioden ausgehende Pfeile angedeutet. Das Laserlicht der einzelnen Dioden wird zunächst durch die Kollimatorlinsen 3, 3' und 3" kollimiert. Die Kollimatorlinse 3 kollimiert dabei das rote Laserlicht der Laserdiode 101, die Kollimatorlinse 3' das grüne Laserlicht der Laserdiode 102 und die Kollimatorlinse 3" das blaue Laserlicht der Laserdiode 103. Die kollimierten Laserlichtbündel fallen anschließend auf das lediglich schematisch angedeutete transmissive holographisch-optische Element 2. Durch eine Strukturierung auf der linken Seite des Elements wird dabei eine Phasenmodulation und eine Interferenz der einfallenden Laserbündel bewirkt.

In der hier beschriebenen Ausführungsform wird ein einzelnes durchgängiges holographisch-optisches Element 2 verwendet, welches entsprechende holographisch-optische Strukturen 201, 202, und 203 für die unterschiedlichen Laserlichtbündel aufweist. Auf die holographisch-optische Struktur 201 fällt dabei das rote Laserlichtbündel, auf die holographisch-optische Struktur 202 das grüne Laserlichtbündel und auf die holographisch-optische Struktur 203 das blaue Laserlichtbündel.

In Fig. 1 ist das rote Laserlichtbündel nach Passieren der Struktur 201 mit Bezugszeichen L, das grüne Laserlichtbündel nach Passieren der Struktur 202 mit Bezugszeichen L' und das blaue Laserlichtbündel nach Passieren der Struktur 203 mit L" bezeichnet. Die Strukturen des holographisch-optischen Elements sind dabei derart ausgestaltet, dass die einzelnen Lichtbündel L, L' und L" die gleiche Symbolik an der gleichen Stelle auf der Straße 4 erzeugen, so dass an dieser Stelle eine überlagerte Symbolik SY in weißer Farbe erscheint. Die Helligkeit der Symbolik ist dabei größer als die Helligkeit des Abblend- bzw. Fernlichts, so dass sich die Symbolik von dem Abblendlicht und Fernlicht abhebt und somit für den Fahrer des Kraftfahrzeugs bzw. für andere Verkehrsteilnehmer sichtbar wird. In der Ausführungsform der Fig. 1 wird das phasenmodulierte Laserlicht, das von dem holographisch-optischen Element 2 stammt, direkt auf die Straße 4 geworfen. Gegebenenfalls können im Strahlengang nach dem holographisch-optischen Element jedoch auch noch weitere optische Elemente, wie z.B. eine oder mehrere Linsen, vorgesehen sein.

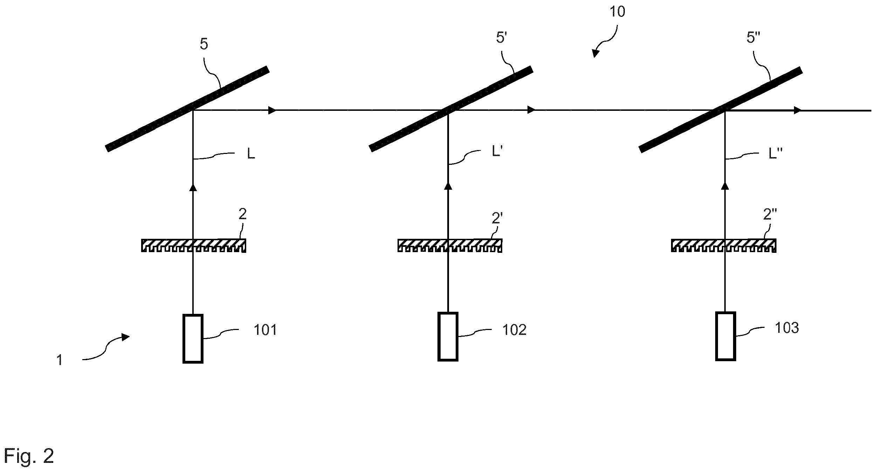

Fig. 2 zeigt in vereinfachter Darstellung eine Abwandlung des Lichtmoduls aus Fig. 1, welche eine Ausführungsform der Erfindung darstellt. Dabei sind in Fig. 2 nicht mehr die Kollimatorlinsen 3, 3' und 3" wiedergegeben und die Lichtbündel L, L' und L" der einzelnen Laserdioden sind lediglich schematisch durch Pfeile angedeutet. In der Ausführungsform der Fig. 2 ist analog zu Fig. 1 eine Laserlichtquelle 1 mit einer roten Laserdiode 101, einer grünen Laserdiode 102 und einer blauen Laserdiode 103 vorgesehen. Im Unterschied zu Fig. 1 enthält das Lichtmodul nunmehr jedoch drei separate holographisch-optische Elemente 2, 2' und 2". Das rote Laserlicht der Laserdiode 101 fällt dabei auf das holographisch-optische Element 2, das grüne Laserlicht der Laserdiode 102 auf das holographisch-optische Element 2' und das blaue Laserlicht der Laserdiode 103 auf das holographisch-optische Element 2". Die holographisch-optischen Elemente bewirken analog zu den holographisch-optischen Strukturen 201 bis 203 der Fig. 1 eine Phasenmodulation des Laserlichts. Das Laserlicht wird nach Passieren der einzelnen holographisch-optischen Elemente jedoch nicht direkt auf die Straße geworfen, sondern über drei Spiegel 5, 5' und 5" abgelenkt.

Der Spiegel 5 ist dabei für das rote Laserlicht und ggf. auch für das Licht anderer Wellenlängen reflektiv. Demgegenüber ist der Spiegel 5' ein dichroitischer Spiegel, der für das grüne Laserlicht reflektiv und für das Licht anderer Wellenlängen transmissiv ist. Ferner ist auch der Spiegel 5" ein dichroitischer Spiegel, der nur für blaues Laserlicht reflektiv ist und welcher das Licht anderer Wellenlängen durchlässt. Die Spiegel 5, 5' und 5" sind parallel zueinander angeordnet und lenken das Laserlicht der einzelnen Laserdioden nach Passieren der jeweiligen holographisch-optischen Elemente um. Durch die oben beschriebenen Eigenschaften der Spiegel 5, 5' und 5" gelangt das an den Spiegeln 5 bzw. 5' reflektierte rote bzw. grüne Laserlicht zum Spiegel 5". Dort überlagert sich dieses Laserlicht mit dem am Spiegel 5" reflektierten blauen Laserlicht. Auf diese Weise wird in Analogie zur Ausführungsform der Fig. 1 eine Überlagerung der drei Laserlichtfarben erreicht, so dass eine weiße Symbolik SY auf der Straße 4 erzeugt wird, die im Vergleich zur Ausführungsform der Fig. 1 für die gleiche Lichtstärke nur 1/3 der Lichtaustrittsfläche benötigt.

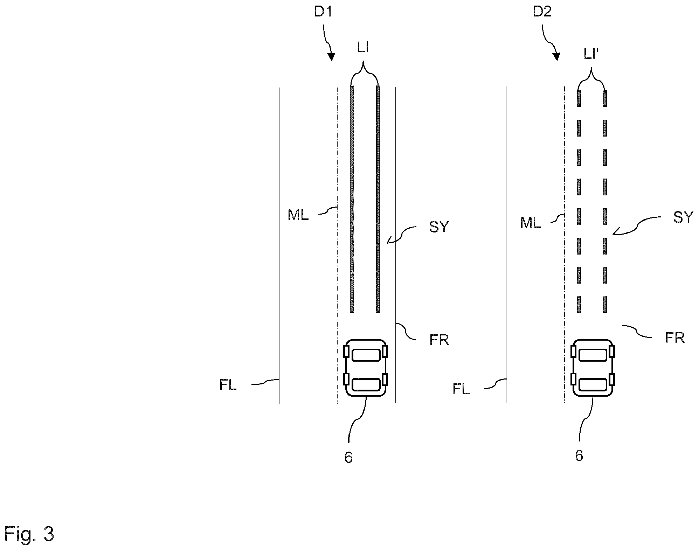

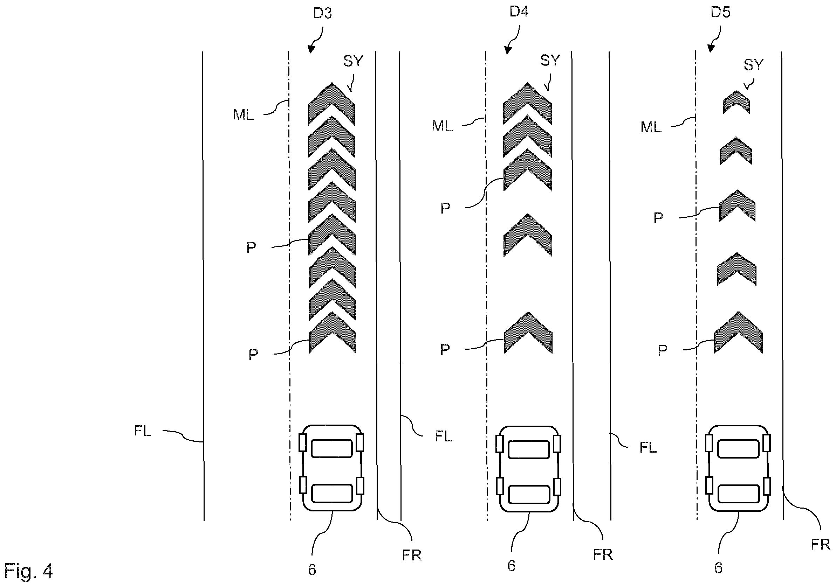

Fig. 3 und Fig. 4 verdeutlichen beispielhaft, welche Arten von Symbolen mittels der erfindungsgemäßen Beleuchtungsvorrichtung generiert werden können. Beide Figuren zeigen dabei verschiedene Draufsichten D1 bis D5 auf ein Kraftfahrzeug 6, das auf einer rechten Fahrspur auf einer Fahrbahn fährt. Die Fahrtrichtung ist in Fig. 3 und Fig. 4 die Richtung nach oben. In den einzelnen Diagrammen ist der rechte Fahrbahnrand mit Bezugszeichen FR, der linke Fahrbahnrand mit Bezugszeichen FL und der Mittelstreifen mit Bezugszeichen ML bezeichnet. Die einzelnen generierten Symboliken werden dabei optional durch ein erfindungsgemäßes Lichtmodul im linken Frontscheinwerfer und ein erfindungsgemäßes Lichtmodul im rechten Frontscheinwerfer des Kraftfahrzeugs 6 generiert.

Gemäß der Draufsicht D1 umfasst die generierte Symbolik SY zwei parallele durchgezogene Linien LI, welche in Längsrichtung der Fahrbahn verlaufen. Gemäß der Draufsicht D2 umfasst die Symbolik SY zwei parallele gestrichelte Linien LI', die wiederum in Längsrichtung der Fahrbahn verlaufen. Die beiden Symboliken der Draufsichten D1 und D2 werden vorzugsweise in Kombination mit einem Fahrerassistenzsystem des Kraftfahrzeugs genutzt. Über eine entsprechende Umfeldsensorik (wie z.B. eine Kamera) wird dabei der rechte Fahrbahnrand FR und der Mittelstreifen ML erkannt und die dargestellten Linien zeigen den Längsverlauf der Fahrbahn an.

Im Unterschied zu Fig. 3 zeigen die Draufsichten D3 bis D5 der Fig. 4 Szenarien, in denen jeweils eine Symbolik in der Form von Pfeilen P erzeugt wird, wobei aus Übersichtlichkeitsgründen nur einige dieser Pfeile mit diesem Bezugszeichen versehen sind. Die Pfeile weisen in Fahrtrichtung des Kraftfahrzeugs 6. Gemäß der Draufsicht D3 werden dabei gleich große Pfeile mit gleichem Abstand zueinander generiert. Im Unterschied hierzu werden gemäß der Draufsicht D4 gleich große Pfeile mit teilweise unterschiedlichen Abständen zueinander erzeugt. In der Draufsicht D5 weisen die Pfeile zueinander den gleichen Abstand auf, jedoch nimmt ihre Größe mit zunehmendem Abstand vom Kraftfahrzeug 6 ab.

Die Generierung einer Symbolik basierend auf Pfeilen gemäß Fig. 4 kann z.B. mit einem Kollisionswarnsystem des Kraftfahrzeugs 6 kombiniert werden. In diesem Fall detektiert das Kraftfahrzeug mit einer Umfeldsensorik das Vorhandensein von Objekten, wie z.B. eines Fußgängers, vor dem Kraftfahrzeug, woraufhin die Pfeilsymbolik ausgegeben wird.

Hierdurch wird der Fußgänger bzw. der Fahrer des Kraftfahrzeugs auf eine drohende Gefahr aufmerksam gemacht. Die soeben beschriebene Symbolik aus Pfeilen kann dabei ggf. auch in einem autonom fahrenden Fahrzeug zum Einsatz kommen, wobei in diesem Fall durch die Symbolik vor allem andere Verkehrsteilnehmer gewarnt werden.

Die im Vorangegangenen beschriebenen Ausführungsformen der Erfindung weisen eine Reihe von Vorteilen auf. Insbesondere wird auf einfache Weise mittels eines oder mehrerer nicht-absorbierender holographisch-optischer Elementen eine vorgegebene Symbolik durch eine Kraftfahrzeug-Beleuchtungseinrichtung im Umfeld des Kraftfahrzeugs generiert. Die holographisch-optischen Elemente bewirken dabei eine Phasenmodulation, ohne die Lichtamplitude durch Absorption zu verringern, so dass weitestgehend keine Lichtverluste auftreten. Mittels einer Laserlichtquelle wird dabei eine ausreichende Helligkeit der Symbolik gewährleistet, wobei durch die Verwendung von flächigen holographisch-optischen Elementen gleichzeitig die Augensicherheit gewährleistet wird. In einer bevorzugten Variante kann die erfindungsgemäße Beleuchtungsvorrichtung mit einer Steuereinrichtung kombiniert werden, welche die Signale einer Umfeldsensorik empfängt. In Abhängigkeit der Signale der Umfeldsensorik kann dann das Anschalten bzw. Abschalten der Beleuchtungseinrichtung gesteuert werden. Zum Beispiel können über die Symbolik Fahrbahnverengungen bzw. drohende Kollisionen vermittelt werden.

### Bezugszeichenliste

- 1: Laserlichtquelle
- 101, 102, 103: Laserdioden
- 2, 2', 2": holographisch-optische Elemente
- 201, 202, 203: holographisch-optische Strukturen
- 3, 3', 3": Kollimatorlinsen
- 4: Straße
- 5, 5', 5": Spiegel
- 6: Kraftfahrzeug
- L, L', L": Laserlichtbündel
- SY: Symbolik
- D1, D2 ..., D5: Draufsicht
- FL, FR: Fahrbahnränder
- ML: Mittelstreifen
- LI, LI': Linien
- P: Pfeile

## Patentansprüche

1. Beleuchtungsvorrichtung für ein Kraftfahrzeug (6) mit einem Lichtmodul (10), wobei das Lichtmodul (10) umfasst:
- eine Laserlichtquelle (1) zur Generierung von Laserlicht (L, L', L"), wobei die Laserlichtquelle (1) eine oder mehrere Laserdioden (101, 102, 103) umfasst, und
- eine optische Einrichtung, auf welche das Laserlicht (L, L', L") fällt und welche derart ausgestaltet ist, dass sie eine vorgegebene Symbolik (SY) im Umfeld des Kraftfahrzeugs (6) generiert, wobei die optische Einrichtung ein oder mehrere holographisch-optische Elemente (2, 2', 2") umfasst, welche für das Laserlicht (L, L', L") im Wesentlichen nicht-absorbierend sind und welche dazu eingerichtet sind, zur Generierung der vorgegebenen Symbolik (SY) eine Interferenz des Laserlichts (L, L', L") durch dessen Phasenmodulation zu bewirken,
wobei die Laserlichtquelle (1) eine RGB-Laserlichtquelle ist, welche als Laserdioden (101, 102, 103) eine Anzahl von roten Laserdioden (101), eine Anzahl von grünen Laserdioden (102) und eine Anzahl von blauen Laserdioden (103) umfasst, wobei der Anzahl von roten Laserdioden (101) eine erste holographisch-optischen Struktur (201) zugeordnet ist, auf welche das rote Laserlicht (L) der Anzahl von roten Laserdioden (101) fällt, der Anzahl von grünen Laserdioden (102) eine zweite holographisch-optische Struktur (202) zugeordnet ist, auf welche das grüne Laserlicht (L') der Anzahl von grünen Laserdioden (102) fällt, und der Anzahl von blauen Laserdioden (103) eine dritte holographisch-optische Struktur (203) zugeordnet ist, auf welche das blaue Laserlicht der Anzahl von blauen Laserdioden (103) fällt, wobei die erste, zweite und dritte holographisch-optische Struktur (201, 202, 203) Bestandteil des oder der holographisch-optischen Elemente (2, 2', 2") sind, wobei das Lichtmodul (10) derart ausgestaltet ist, dass das rote, grüne und blaue Laserlicht (L, L', L") nach Passieren der ersten, zweiten und dritten holographisch-optischen Struktur (201, 202, 203) überlagert wird und hierdurch die Symbolik (SY) in Weißlicht generiert wird,
**dadurch gekennzeichnet, dass**
die optische Einrichtung neben dem oder den holographisch-optischen Elementen (2, 2', 2") als weitere optische Elemente (5, 5', 5"), die im Strahlengang des Laserlichts (L, L', L") auf das oder die holographisch-optischen Elemente (2, 2', 2") folgen, umfasst:
einen ersten Spiegel (5), auf den bei angeschaltetem Lichtmodul (10) ausschließlich ein erstes Laserlicht (L) ausgewählt aus dem roten, grünen und blauen Laserlicht (L, L', L") fällt und welcher das erste Laserlicht (L) reflektiert, einen zweiten Spiegel (5'), auf den bei angeschaltetem Lichtmodul (10) ausschließlich das am ersten Spiegel (5) reflektierte erste Laserlicht (L) und ein zweites Laserlicht (L') ausgewählt aus dem roten, grünen und blauen Laserlicht (L, L', L") fallen, wobei sich das zweite Laserlicht (L') vom ersten Laserlicht (L) unterscheidet und wobei der zweite Spiegel (5') das zweite Laserlicht (L') reflektiert und das erste Laserlicht (L) durchlässt, und einen dritten Spiegel (5"), auf den bei angeschaltetem Lichtmodul (10) ausschließlich das am zweiten Spiegel (5') durchgelassene erste Laserlicht (L), das am zweiten Spiegel (5') reflektierte zweite Laserlicht (L') und ein drittes Laserlicht (L") ausgewählt aus dem roten, grünen und blauen Laserlicht (L, L', L") fallen, wobei sich das dritte Laserlicht (L") vom ersten und zweiten Laserlicht (L, L') unterscheidet und wobei der dritte Spiegel (5") das dritte Laserlicht (L") reflektiert und das erste und zweite Laserlicht (L, L') durchlässt, wobei der erste, zweite und dritte Spiegel (5, 5', 5") derart zueinander angeordnet sind, dass das an diesen Spiegeln (5, 5', 5") reflektiere Laserlicht überlagert wird und hierdurch die Symbolik (SY) in Weißlicht generiert wird.

2. Beleuchtungsvorrichtung nach Anspruch 1, **dadurch gekennzeichnet, dass** das oder die holographisch-optischen Elemente (2, 2', 2") ein oder mehrere diffraktive optische Elemente umfassen.

3. Beleuchtungsvorrichtung nach Anspruch 1 oder 2, **dadurch gekennzeichnet, dass** die Gesamtfläche des oder der holographisch-optischen Elemente (2, 2', 2") in Draufsicht zwischen 25 mm² und 500 mm², insbesondere zwischen 25 mm² und 250 mm², liegt.

4. Beleuchtungsvorrichtung nach einem der vorhergehenden Ansprüche, **dadurch gekennzeichnet, dass** das Lichtmodul (10) derart ausgestaltet ist, dass das Laserlicht (L, L', L") der Laserlichtquelle (1) unter Zwischenschaltung von einer oder mehreren Lichtfasern zu der optischen Einrichtung gelenkt wird.

5. Beleuchtungsvorrichtung nach einem der vorhergehenden Ansprüche, **dadurch gekennzeichnet, dass** die Beleuchtungsvorrichtung neben dem Lichtmodul (10) eine Lichteinrichtung umfasst, um eine vorgegebene Lichtverteilung zusätzlich zur Symbolik (SY) zu generieren.

6. Beleuchtungsvorrichtung nach Anspruch 5, **dadurch gekennzeichnet, dass** die Beleuchtungsvorrichtung einen Scheinwerfer umfasst und die Lichteinrichtung dazu eingerichtet ist, als vorgegebene Lichtverteilung eine Abblendlicht- und/oder Fernlichtverteilung zu generieren.

7. Beleuchtungsvorrichtung nach Anspruch 5 oder 6, **dadurch gekennzeichnet, dass** die Beleuchtungsvorrichtung eine Fahrzeugsignalleuchte, insbesondere ein Rücklicht und/oder ein Bremslicht, umfasst und die Lichteinrichtung dazu eingerichtet ist, als vorgegebene Lichtverteilung ein Lichtsignal zu generieren.

8. Beleuchtungsvorrichtung nach einem der Ansprüche 5 bis 7, **dadurch gekennzeichnet, dass** bei angeschalteter Lichteinrichtung und angeschaltetem Lichtmodul (10) die vorgegebene Symbolik (SY) mit der vorgegebenen Lichtverteilung überlagert ist.

9. Beleuchtungsvorrichtung nach einem der vorhergehenden Ansprüche, **dadurch gekennzeichnet, dass** die optische Einrichtung neben dem oder den holographisch-optischen Elementen (2, 2', 2") eine oder mehrere Linsen umfasst, die im Strahlengang des Laserlichts (L, L', L") auf das oder die holographisch-optischen Elemente (2, 2', 2") folgen.

10. Beleuchtungsvorrichtung nach einem der vorhergehenden Ansprüche, **dadurch gekennzeichnet, dass** die Beleuchtungsvorrichtung eine Aktorik umfasst, mit der das Lichtmodul (10) relativ zu der restlichen Beleuchtungsvorrichtung bewegbar ist.

11. Beleuchtungsvorrichtung nach einem der vorhergehenden Ansprüche, **dadurch gekennzeichnet, dass** eine Steuereinrichtung vorgesehen ist, welche dazu eingerichtet ist, Sensorsignale von einer Umfeldsensorik des Kraftfahrzeugs (6) zu empfangen und in Abhängigkeit von den Sensorsignalen der Umfeldsensorik das An- und Abschalten des Lichtmoduls (10) zu steuern.

12. Beleuchtungsvorrichtung nach Anspruch 11, **dadurch gekennzeichnet, dass** die Steuereinrichtung derart ausgestaltet ist, dass das Lichtmodul (10) angeschaltet wird, wenn ein oder mehrere Objekte, vorzugsweise ein oder mehrere Objekte unter einem Mindestabstand zum Kraftfahrzeug, durch die Umfeldsensorik detektiert werden.

13. Kraftfahrzeug, umfassend eine oder mehrere Beleuchtungsvorrichtungen nach einem der vorhergehenden Ansprüche.

## Claims

1. Lighting apparatus for a motor vehicle (6) comprising a light module (10), wherein the light module (10) comprises:
- a laser light source (1) for generating laser light (L, L', L"), wherein the laser light source (1) comprises one or more laser diodes (101, 102, 103) and
- an optical device on which the laser light (L, L', L'') is incident and which is configured in such a way that it generates a prespecified symbol arrangement (SY) in the area surrounding the motor vehicle (6), wherein the optical device comprises one or more holographic optical elements (2, 2', 2") which are substantially non-absorbent to the laser light (L, L', L") and which are designed to produce interference of the laser light (L, L', L") by means of phase modulation thereof in order to generate the prespecified symbol arrangement (SY), wherein the laser light source (1) is an RGB laser light source which comprises a number of red laser diodes (101), a number of green laser diodes (102) and a number of blue laser diodes (103) as laser diodes (101, 102, 103), wherein a first holographic optical structure (201) on which the red laser light (L) of the number of red laser diodes (101) is incident is associated with the number of red laser diodes (101), a second holographic optical structure (202) on which the green laser light (L') of the number of green laser diodes (102) is incident is associated with the number of green laser diodes (102), and a third holographic optical structure (203) on which the blue laser light of the number of blue laser diodes (103) is incident is associated with the number of blue laser diodes (103), wherein the first, second and third holographic optical structures (201, 202, 203) are constituent parts of the holographic optical element or elements (2, 2', 2"), wherein the light module (10) is configured in such a way that the red, green and blue laser light (L, L', L") is superimposed after passing the first, second and third holographic optical structures (201, 202, 203) and as a result the symbol arrangement (SY) is generated in white light,
**characterized in that** the optical device comprises, in addition to the holographic optical element or elements (2, 2', 2''), as further optical elements (5, 5', 5'') which follow the holographic optical element or elements (2, 2', 2'') in the beam path of the laser light (L, L', L"):
a first mirror (5) on which only a first laser light (L) selected from the red, green and blue laser light (L, L', L") is incident when the light module (10) is switched on and which reflects the first laser light (L), a second mirror (5') on which only the first laser light (L), which is reflected at the first mirror (5), and a second laser light (L') selected from the red, green and blue laser light (L, L', L") are incident when the light module (10) is switched on, wherein the second laser light (L') differs from the first laser light (L) and wherein the second mirror (5') reflects the second laser (L') and transmits the first laser light (L), and a third mirror (5'') on which only the first laser light (L), which is transmitted at the second mirror (5'), the second laser light (L'), which is reflected at the second mirror (5'), and a third laser light (L") selected from the red, green and blue laser light (L, L', L") are incident when the light module (10) is switched on, wherein the third laser light (L") differs from the first and second laser light (L, L') and wherein the third mirror (5") reflects the third laser light (L") and transmits the first and second laser light (L, L'), wherein the first, second and third mirrors (5, 5', 5'') are arranged in relation to one another in such a way that the laser light which is reflected at these mirrors (5, 5', 5'') is superimposed and as a result the symbol arrangement (SY) is generated in white light.

2. Lighting apparatus according to Claim 1, **characterized in that** the holographic optical element or elements (2, 2', 2") comprises/comprise one or more diffractive optical elements.

3. Lighting apparatus according to Claim 1 or 2, **characterized in that** the total surface area of the holographic optical element or elements (2, 2', 2") in plan view is between 25 mm² and 500 mm², in particular between 25 mm² and 250 mm².

4. Lighting apparatus according to one of the preceding claims, **characterized in that** the light module (10) is configured in such a way that the laser light (L, L', L") of the laser light source (1) is directed to the optical device with the interposition of one or more optical fibres.

5. Lighting apparatus according to one of the preceding claims, **characterized in that** the lighting apparatus comprises, in addition to the light module (10), a light device in order to generate a prespecified light distribution in addition to the symbol arrangement (SY).

6. Lighting apparatus according to Claim 5, **characterized in that** the lighting apparatus comprises a headlamp, and the light device is designed to generate low beam and/or high beam distribution as prespecified light distribution.

7. Lighting apparatus according to Claim 5 or 6, **characterized in that** the lighting apparatus comprises a vehicle signalling lamp, in particular a rear light and/or a brake light, and the light device is designed to generate a light signal as prespecified light distribution.

8. Lighting apparatus according to one of Claims 5 to 7, **characterized in that**, when the light device is switched on and the light module (10) is switched on, the prespecified symbol arrangement (SY) is superimposed with the prespecified light distribution.

9. Lighting apparatus according to one of the preceding claims, **characterized in that** the optical device comprises, in addition to the holographic optical elements (2, 2', 2''), one or more lenses which follow the holographic optical element or elements (2, 2', 2") in the beam path of the laser light (L, L', L").

10. Lighting apparatus according to one of the preceding claims, **characterized in that** the lighting apparatus comprises an actuator system with which the light module (10) can be moved relative to the rest of the lighting apparatus.

11. Lighting apparatus according to one of the preceding claims, **characterized in that** a control device is provided which is designed to receive sensor signals from a surrounding area sensor system of the motor vehicle (6) and to control the processes of switching on and switching off the light module (10) depending on the sensor signals of the surrounding area sensor system.

12. Lighting apparatus according to Claim 11, **characterized in that** the control device is configured in such a way that the light module (10) is switched on when one or more objects, preferably one or more objects at a minimum distance from the motor vehicle, are detected by the surrounding area sensor system.

13. Motor vehicle comprising one or more lighting apparatuses according to one of the preceding claims.

## Revendications

1. Dispositif d'éclairage destiné à un véhicule automobile (6), ledit dispositif d'éclairage comprenant un module de lumière (10), le module de lumière (10) comprenant :
- une source de lumière laser (1) destinée à générer une lumière laser (L, L', L"), la source de lumière laser (1) comprenant une ou plusieurs diodes laser (101, 102, 103), et
- un moyen optique auquel la lumière laser (L, L', L'') est incidente et qui est conçu de manière à générer une symbolique prédéterminée (SY) dans l'environnement du véhicule automobile (6), le moyen optique comprenant un ou plusieurs éléments optiques holographiques (2, 2', 2'') qui sont sensiblement non-absorbants pour la lumière laser (L, L', L") et qui sont conçus pour produire une interférence de la lumière laser (L, L', L") par modulation de phase de celle-ci afin de générer la symbolique spécifiée (SY), la source de lumière laser (1) étant une source de lumière laser RVB qui comprend comme diodes laser (101, 102, 103) un certain nombre de diodes laser rouges (101), un certain nombre de diodes laser vertes (102) et un certain nombre de diodes laser bleues (103), le nombre de diodes laser rouges (101) étant associées à une première structure optique holographique (201) à laquelle la lumière laser rouge (L) du nombre de diodes laser rouges (101) est incidente, le nombre de diodes laser vertes (102) étant associées à une deuxième structure optique holographique (202) à laquelle la lumière laser verte (L') du nombre de diodes laser vertes (102) est incidente, et le nombre de diodes laser bleues (103) étant associées à une troisième structure optique holographique (203) à laquelle la lumière laser bleue du nombre de diodes laser bleues (103) est incidente, les première, deuxième et troisième structures optiques holographiques (201, 202, 203) faisant partie du ou des éléments optiques holographiques (2, 2', 2''), le module de lumière (10) étant conçu de manière à ce que les lumières laser rouge, verte et bleue (L, L', L") soient superposées après avoir traversé les première, deuxième et troisième structures optiques holographiques (201, 202, 203) et à ce que la symbolique (SY) soit ainsi générée en lumière blanche,
**caractérisé en ce que**
en plus du ou des éléments optiques holographiques (2, 2', 2'') le moyen optique comprend comme autres éléments optiques (5, 5', 5") qui succèdent au ou aux éléments optiques holographiques (2, 2', 2") dans le trajet de faisceau de la lumière laser (L, L', L") :
un premier miroir (5) auquel, lorsque le module d'éclairage (10) est activé, seule une première lumière laser (L) sélectionnée parmi les lumières laser rouge, verte et bleue (L, L', L'') est incidente et qui réfléchit la première lumière laser (L), un deuxième miroir (5') auquel, lorsque le module d'éclairage (10) est activé, seule la première lumière laser (L) réfléchie par le premier miroir (5) et une deuxième lumière laser (L') sélectionnée parmi les lumières laser rouge, verte et bleue (L, L', L") sont incidentes, la deuxième lumière laser (L') étant différente de la première lumière laser (L) et le deuxième miroir (5') réfléchissant la deuxième lumière laser (L') et laissant passer la première lumière laser (L), et un troisième miroir (5'') auquel, lorsque le module d'éclairage (10) est activé, seule la première lumière laser (L) que le deuxième miroir (5') laisse passer, la deuxième lumière laser (L') réfléchie par le deuxième miroir (5') et une troisième lumière laser (L") choisie parmi les lumières laser rouge, verte et bleue (L, L', L") sont incidentes, la troisième lumière laser (L") étant différente des première et deuxième lumières laser (L, L'), et le troisième miroir (5'') réfléchissant la troisième lumière laser (L'') et laissant passer les première et deuxième lumières laser (L, L'), les premier, deuxième et troisième miroirs (5, 5', 5") étant disposés les uns par rapport aux autres de manière à ce que la lumière laser réfléchie par ces miroirs (5, 5', 5") soit superposée et à ce que la symbolique (SY) soit ainsi générée en lumière blanche.

2. Dispositif d'éclairage selon la revendication 1, **caractérisé en ce que** le ou les éléments optiques holographiques (2, 2', 2") comprennent un ou plusieurs éléments optiques diffractifs.

3. Dispositif d'éclairage selon la revendication 1 ou 2, **caractérisé en ce que** la surface totale du ou des éléments optiques holographiques (2, 2', 2") en vue de dessus est comprise entre 25 mm² et 500 mm², notamment entre 25 mm² et 250 mm².

4. Dispositif d'éclairage selon l'une des revendications précédentes, **caractérisé en ce que** le module de lumière (10) est conçu de manière à ce que la lumière laser (L, L', L") de la source de lumière laser (1) sont dirigées vers le moyen optique avec interposition d'une ou plusieurs fibres optiques.

5. Dispositif d'éclairage selon l'une des revendications précédentes, **caractérisé en ce que** le dispositif d'éclairage comprend un moyen lumineux en plus du module de lumière (10) pour générer en plus de la symbolique (SY) une répartition de lumière spécifiée.

6. Dispositif d'éclairage selon la revendication 5, **caractérisé en ce que** le dispositif d'éclairage comprend un projecteur et le moyen d'éclairage est conçu pour générer comme répartition de lumière spécifiée une répartition feu de croisement et/ou plein phare.

7. Dispositif d'éclairage selon la revendication 5 ou 6, **caractérisé en ce que** le dispositif d'éclairage comprend un feu de signalisation de véhicule, notamment un feu arrière et/ou un feu de freinage, et le moyen lumineux est conçu pour générer un signal lumineux comme répartition de lumière spécifiée.

8. Dispositif d'éclairage selon l'une des revendications 5 à 7, **caractérisé en ce que**, lorsque le moyen lumineux est activé et que le module de lumière (10) est activé, la symbolique spécifiée (SY) se superposent à la répartition de lumière spécifiée.

9. Dispositif d'éclairage selon l'une des revendications précédentes, **caractérisé en ce que** le moyen optique comprend en plus du ou des éléments optiques holographiques (2, 2', 2'') une ou plusieurs lentilles qui succèdent au ou aux éléments optiques holographiques (2, 2', 2'') dans le trajet de faisceau de la lumière laser (L, L', L'').

10. Dispositif d'éclairage selon l'une des revendications précédentes, **caractérisé en ce que** le dispositif d'éclairage comprend un actionneur permettant de déplacer le module de lumière (10) par rapport au reste du dispositif d'éclairage.

11. Dispositif d'éclairage selon l'une des revendications précédentes, **caractérisé en ce qu'**un moyen de commande est prévu qui est conçu pour recevoir des signaux de capteur d'un ensemble de capteurs d'environnement du véhicule automobile (6) et pour commande l'activation et la désactivation du module d'éclairage (10).

12. Dispositif d'éclairage selon la revendication 11, **caractérisé en ce que** le moyen de commande est conçu de manière à activer le module de lumière (10) lorsqu'un ou plusieurs objets, de préférence un ou plusieurs objets à une distance minimale du véhicule automobile, sont détectés par les capteurs d'environnement.

13. Véhicule automobile, comprenant un ou plusieurs dispositifs d'éclairage selon l'une des revendications précédentes.
